# FASCICULE DE BREVET EUROPEEN

(11) **EP 0 860 792 B1**
(45) Date de publication et mention de la délivrance du brevet: **24.11.2004**
(21) Numéro de dépôt: 98201350.0
(22) Date de dépôt: 26.12.1994
(51) Int. Cl.: G06K 19/077, G06K 7/00

(54) **Connecteur électrique pour une carte à mémoire électronique**
Elektrischer Verbinder für elektronische Speicherkarte
Electrical connector for electronic memory card

(30) Priorité: 24.12.1993 FR 9315633
(43) Date de publication de la demande: 26.08.1998
(62) Demande divisionnaire de: 95905168.1
(73) Titulaire: ITT Manufacturing Enterprises, Inc., Wilmington, Delaware 19801 (US)
(72) Inventeur: Bricaud, Hervé, 39100 Dole (FR); Juret, Bernard, 39100 Dole (FR)
(74) Mandataire: Kohn, Philippe

(56) Documents cités:
- EP-A- 0 366 513
- EP-A- 0 520 080
- DE-A- 3 602 668
- FR-A- 2 587 549
- FR-A- 2 633 754

## Description

La présente invention concerne un connecteur électrique pour le raccordement d'une carte à mémoire électronique comportant sur une de ses faces principales une pluralité de plages de contact électrique alignées parallèlement à la direction d'introduction de la carte dans un dispositif de lecture-écriture.

L'invention concerne plus particulièrement un connecteur du type comportant un support en matériau isolant, réalisé par moulage, présentant une face plane parallèle à la direction d'introduction de la carte et une pluralité de conducteurs électriques en forme de lames déformables élastiquement qui s'étendent parallèlement à la direction d'introduction de la carte, chaque lame de contact comprenant une première extrémité incurvée, de contact avec l'une des plages de la carte, faisant saillie hors du plan de la face plane du support, une portion médiane de liaison de la lame au support et une seconde extrémité de raccordement de la lame à un circuit de traitement du dispositif de lecture-écriture, chaque lame de contact s'étendant parallèlement à la direction d'introduction.

Selon une conception connue, qui est par exemple décrite et représentée dans le document FR-A-2.638.293, chaque lame de contact se présente sous la forme d'une poutre encastrée à l'une de ses extrémités dans le matériau isolant du support et qui s'étend longitudinalement depuis cette extrémité pour se terminer par une extrémité libre incurvée de contact.

Cette conception a pour inconvénient d'être encombrante du fait de la longueur de chaque lame de contact nécessaire pour qu'elle présente une élasticité suffisante lui permettant d'assurer une force de contact déterminée avec une plage correspondante d'une carte.

Il a déjà été proposé dans le document EP-A-0.520.080 (MOLEX) un connecteur du type dans lequel que la partie médiane de liaison de chaque lame est une partie repliée en forme d'épingle à cheveux, s'étendant sensiblement parallèlement à la face plane du support, comportant une première branche dont l'extrémité libre se prolonge par l'extrémité de raccordement de la lame et qui comporte des moyens de fixation de la lame au support, et comportant une seconde branche dont l'extrémité libre se prolonge par l'extrémité incurvée de contact de la lame, la première et la seconde branches étant reliées entre elles par un pli médian en forme de U.

L'invention a pour but de proposer un connecteur du type mentionné précédemment dont les capacités de fléchissement vertical de chaque lame sont accrues.

Dans ce but, l'invention propose un connecteur électrique pour le raccordement d'une carte à mémoire électronique comportant sur une de ses faces principales une pluralité de plages de contact électrique alignées, le connecteur comportant un support en matériau isolant présentant une face plane parallèle à la carte et une pluralité de conducteurs électriques en forme de lames déformables élastiquement comprenant chacune une première extrémité incurvée, de contact avec l'une des plages de la carte, faisant saillie hors du plan de la face plane du support, une portion médiane de liaison de la lame au support et une seconde extrémité de raccordement de la lame à un circuit de traitement d'un dispositif de lecture-écriture, du type dans lequel la partie médiane de liaison de chaque lame est une partie repliée en forme d'épingle à cheveux s'étendant sensiblement parallèlement à la face plane du support, comportant une première branche dont une portion d'extrémité libre est encastrée dans un logement du support et se prolonge par l'extrémité de raccordement de la lame, et comportant une seconde branche dont l'extrémité libre se prolonge par l'extrémité incurvée de contact de la lame, la première et la seconde branches étant reliées entre elles par un pli médian en forme de U, caractérisé en ce que l'extrémité incurvée se prolonge par un bec sensiblement parallèle à la face plane du support, et en ce que, pour augmenter la course de fléchissement de chaque lame de contact, il est prévu un trou dans ladite portion encastrée de la lame, ce trou recevant l'extrémité libre du bec lorsque la lame est en position fléchie.

Selon d'autres caractéristiques de l'invention :
- le bec est sollicité élastiquement en appui contre une surface de butée du connecteur ;
- la première branche s'étend en regard d'un logement formé en vis-à-vis dans la face plane du support pour permettre un fléchissement de la première branche selon une direction sensiblement perpendiculaire à la face plane du support ;
- l'extrémité incurvée de contact de chaque lame s'étend sensiblement au droit de l'extrémité libre encastrée de la première branche de la partie médiane de liaison de la lame;
- chaque lame de contact est réalisée sous la forme d'une bande métallique découpée et pliée d'épaisseur sensiblement constante, et chaque bande de contact comporte un tronçon intermédiaire d'épaisseur réduite (e), réalisé notamment par écrasement, qui s'étend entre les extrémités de contact et de raccordement de la lame ;
- le tronçon d'épaisseur réduite (e) s'étend entre l'extrémité libre de la première branche et l'extrémité libre de la seconde branche ;
- l'extrémité incurvée de contact est située longitudinalement entre le pli médian qui relie entre elles les première et seconde branches de la partie médiane de liaison, et l'extrémité de raccordement .

D'autres caractéristiques et avantages de l'invention apparaîtront à la lecture de la description détaillée qui va suivre pour la compréhension de laquelle on se reportera aux dessins annexés dans lesquels :
- la figure 1 est une vue latérale en élévation d'un connecteur réalisé conformément aux enseignements de l'invention ;
- la figure 2 est une vue de dessus du connecteur illustré à la figure 1 ;
- la figure 3 est une vue latérale à plus grande échelle et en coupe partielle selon la ligne 3-3 de la figure 4, du connecteur illustré aux figures 1 et 2 ;
- la figure 4 est une vue de dessus du connecteur illustré à la figure 3 avec arrachement d'une moitié du couvercle du connecteur ;
- la figure 5 est une demi-vue en section selon la ligne 5-5 de la figure ; et
- la figure 6 est une vue similaire à celle de la partie supérieure droite de la figure 1 qui illustre une variante de réalisation d'un connecteur conforme aux enseignements de l'invention du type comportant des lames de contact en forme d'épingle à cheveux.

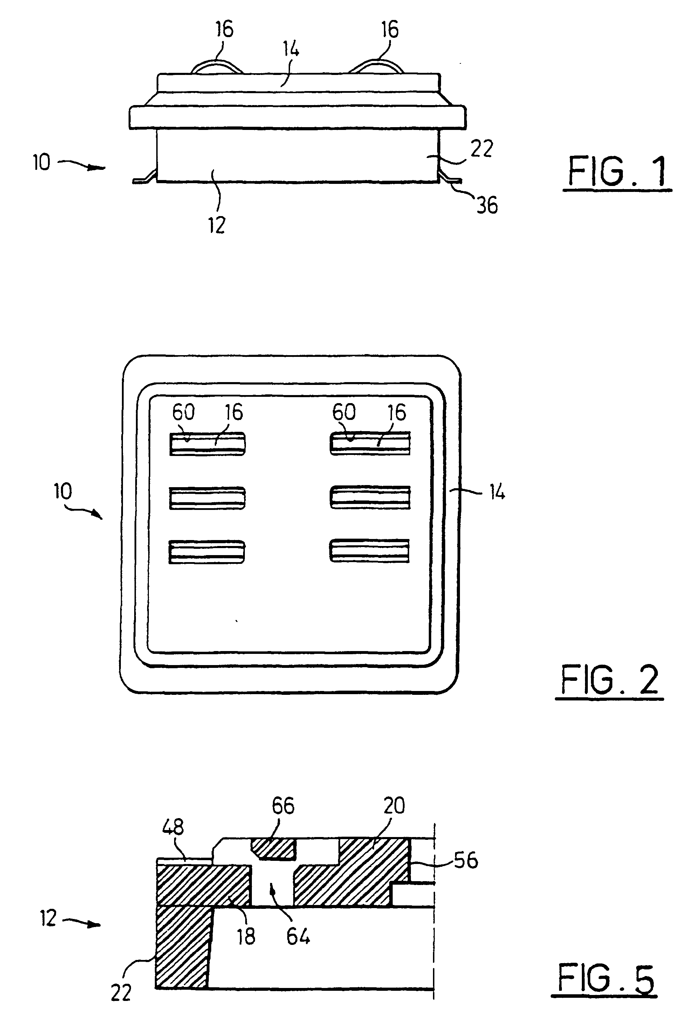

Le connecteur 10 illustré sur les figures 1 à 5 est pour l'essentiel constitué par un boîtier ou support en matériau isolant 12 et par un couvercle 14 en matière plastique moulée, et par une série de conducteurs électriques 16.

Comme on peut le voir sur les figures, le boîtier ou support 12 est pour l'essentiel constitué d'une plaque horizontale 18 qui délimite une face plane 20 et d'une paroi latérale 22 de contour sensiblement rectangulaire.

La face supérieure 20 de contour rectangulaire comporte une série de logements 24 formés en creux dans la face supérieure 20 de la plaque 18.

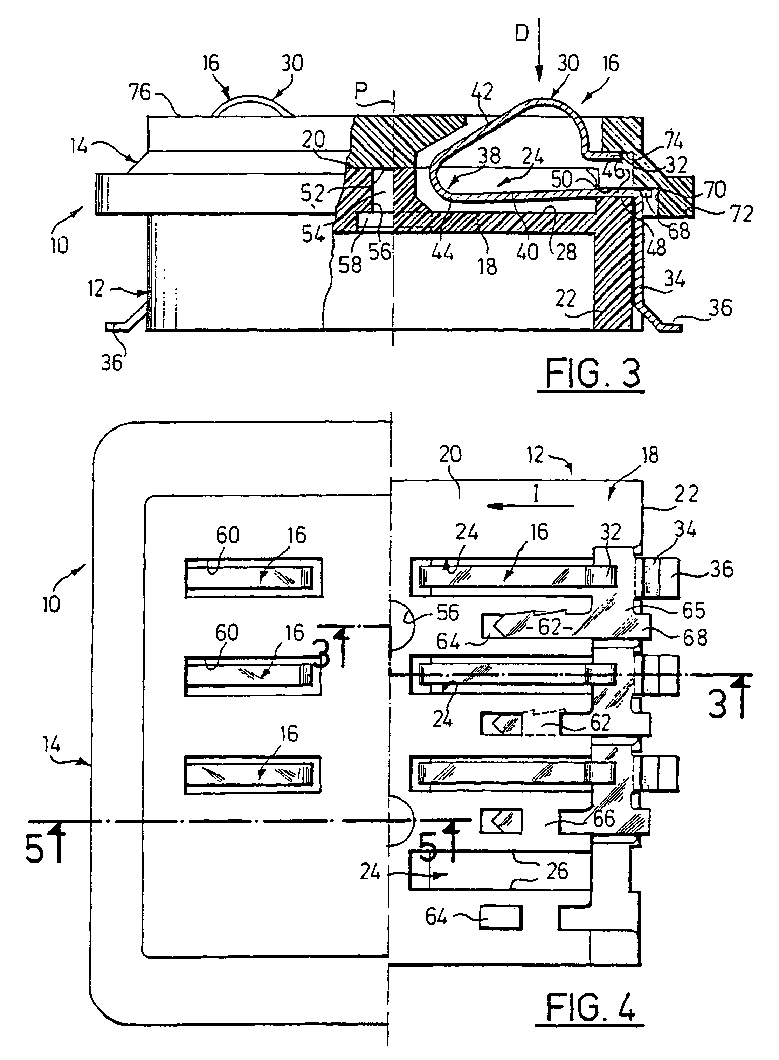

Dans le mode de réalisation illustré sur les figures, le connecteur présente une symétrie générale de conception par rapport à un plan vertical médian P indiqué sur les figures 3 et 4 et le support 12 comporte ainsi deux séries de quatre logements 24 alignés deux à deux.

Chaque logement 24 se présente sous la forme d'une encoche à bords ou faces parallèles 26 qui est délimité par un fond de logement 28 qui s'étend dans un plan parallèle à la face plane supérieure 20 du boîtier 12.

Chaque logement 24 est conçu pour recevoir un conducteur électrique 16 qui est réalisé dans un matériau conducteur déformable élastiquement.

Chaque élément 16 est ainsi réalisé sous la forme d'une lame de contact découpée et pliée.

Chaque lame de contact 16 s'étend selon une direction générale longitudinale contenue dans un plan vertical parallèle aux faces parallèles 26 du logement correspondant 24 et perpendiculaire à la face 20 du support 12.

Chaque lame de contact 16 comporte une première extrémité incurvée convexe 30 qui est prévue pour coopérer avec une plage correspondante (non représentée) d'une carte à mémoire électronique qui est susceptible d'être introduite, selon une direction I parallèle aux logements 24, dans un dispositif de lecture-écriture (non représenté) équipé d'un connecteur 10 selon l'invention.

L'extrémité incurvée de contact 30 de chaque lame 16 se prolonge par un bec 32 sensiblement parallèle à la face plane 20 dont la fonction sera expliquée par la suite.

Chaque lame de contact 16 comporte également une extrémité de raccordement 34 qui s'étend verticalement, c'est-à-dire selon une direction perpendiculaire à la face supérieure 20, le long de la paroi latérale 22 du support 12 et qui se termine par une patte rabattue à angle droit 36 permettant le raccordement de chaque lame 16 sur une piste d'une plaque à circuit imprimé (non représentée), par exemple selon la technique du report à plat des composants.

L'extrémité incurvée de contact 30 et l'extrémité de raccordement 34 sont reliées entre elles par une partie médiane de liaison 38 en forme d'épingle à cheveux.

La partie médiane de liaison 38 de chaque lame 16 comporte ainsi une première branche 40 qui s'étend selon une direction sensiblement parallèle à la face plane 20 du support 12 et une seconde branche 42 formant un angle aigu par rapport à la première branche 30 et qui sont reliées entre elles par le pli médian 44 en forme de U.

Ce pli médian 44 est tourné vers le centre du connecteur c'est à dire qu'il est situé sensiblement au droit de la puce de la carte à puce lorsque cette dernière est en position de lecture-écriture.

Cette disposition géométrique confère au connecteur une très grande compacité et un faible encombrement sur la carte à circuit imprimé sur laquelle il sera monté.

En effet, la longueur du connecteur, mesurée parallèlement à la direction longitudinale des lames 16 est la plus réduite possible.

L'extrémité libre 46 de la première branche 40 se prolonge par l'extrémité de raccordement 34 de la lame 16 tandis que l'extrémité libre de la seconde branche 42 de la partie médiane de liaison 38 se prolonge par l'extrémité incurvée de contact 30.

L'extrémité libre 46 de la première branche 40 de chaque lame 16 est maintenue encastrée de façon que la partie médiane de liaison 38, et notamment la première branche 40 puisse fléchir élastiquement selon une direction D sensiblement perpendiculaire au plan de la face plane du support 12.

A cet effet, l'extrémité 46 est pincée entre une portion plane 48 du support 12 parallèle à la face plane 20 de ce dernier, mais décalée verticalement vers le bas par rapport à cette face supérieure 20, et une portion de surface correspondante 50 formée en vis-à-vis dans la face interne 52 du couvercle 14 qui prend appui contre la face supérieure plane 20 du support 12.

En effet, et comme on peut le voir sur les figures 3 et 4, le couvercle 14 est fixé au boîtier 12 et par sertissage à chaud grâce à deux plots 54 réalisés venus de matière avec le couvercle 14, qui s'étendent verticalement vers le bas depuis la face inférieure 52 et qui sont reçus dans deux trous correspondants 56 formés dans la paroi supérieure plane 18 du support 12.

Après sertissage à chaud des têtes 58 des plots 54, le couvercle 14 est ainsi maintenu fermement sur le support 12 pour pincer les extrémités 46 des premières branches 44 des parties médianes de liaison 38 des lames 16 pour assurer leur effet d'encastrement dans des logements délimités par des surfaces 48 et 50.

Afin de permettre le passage des extrémités incurvées de contact 30 des lames 16 et en partie le passage des secondes branches 42 des parties médianes de liaison 38, le couvercle 14 comporte une série de fentes débouchantes 60 alignées en regard des logements 24 et des lames 16.

Dans le mode de réalisation illustré sur les figures 1 à 5, le connecteur 10 est du type à huit logements 24 mais à six lames de contact 16 et le couvercle 14 ne comporte donc que six fentes débouchantes 60 qui sont parallèles entre elles et opposées deux à deux.

Préalablement à la mise en place du couvercle 14, chaque lame de contact 16 est mise en place dans le support 12 par introduction latérale, c'est-à-dire sensiblement selon une direction parallèle à la direction d'introduction I.

Au cours de cette introduction latérale, une patte latérale d'accrochage en forme de harpon 62 de chaque lame de contact 16 est introduite à force dans une fente correspondante 64 du support 12.

Chaque patte d'accrochage 62 s'étend sensiblement parallèlement à la branche 40 de la partie médiane de liaison 38 à laquelle elle est reliée par une traverse 65.

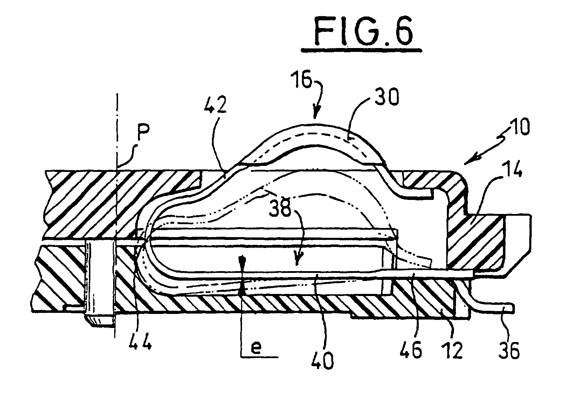

Chaque fente 64 est délimitée vers le haut par un pont transversal 66 réalisé venu de moulage avec le support 12 comme on peut le voir sur la figure 5.

Chaque patte d'accrochage 62 comporte un talon en saillie 68 qui s'étend latéralement vers l'extérieur au-delà de l'extrémité de raccordement 34 de la lame 16 en regard d'une face interne 70 d'une collerette périphérique 72 du couvercle 14 qui s'oppose ainsi à tout échappement latéral accidentel de la lame de contact 16.

En position montée, et comme on peut le voir notamment sur la figure 3, le bec 32 de chaque lame de contact 30 est maintenu en appui élastique contre une portion en vis-à-vis 74 de la face inférieure 52 du couvercle 14 afin de déterminer une position géométrique précise de repos de la partie incurvée de contact 30 de chacune des lames 16 de manière que celle-ci occupe une position géométrique précise et déterminée par rapport au support 12.

Le couvercle 14 maintient ainsi toutes les lames 16 légèrement en précontrainte élastique dans une position géométrique précise.

Cette conception a pour avantage de permettre de faire varier la force d'appui des contacts sur les plots de la carte à mémoire en fonction de la géométrie exact du pliage de la partie médiane de liaison 38, tout en assurant une cote précise de dépassement de la partie de contact incurvée 30 par rapport à la face supérieure 76 du couvercle 14 du connecteur 10.

Le connecteur 10 qui vient d'être décrit présente ainsi une très grande compacité tout en assurant des performances optimales de contact électrique des lames 16 sur les plots d'une carte introduite dans un dispositif de lecture-écriture équipé d'un connecteur selon l'invention.

La mise en place et la fixation des lames 16 dans le support 12 est assurée mécaniquement par verrouillage des pattes d'accrochage en forme de harpon 62 lors de l'assemblage mécanique des lames 16 dans le support ou boîtier 12 moulé préalablement.

On décrira maintenant la variante de réalisation illustrée sur la figure 6 sur laquelle des éléments identiques ou similaires à ceux décrits et représentés précédemment sont désignés par les mêmes chiffres de référence.

Sur la figure 6, le tronçon intermédiaire de chaque lame de contact 16 qui s'étend depuis la portion encastrée 46 jusqu'à la portion incurvée de contact 30 est amincie et présente ainsi une épaisseur "e" réduite par rapport à l'épaisseur de la bande de métal dans laquelle les lames de contact sont réalisées par découpe et pliage.

Cette épaisseur réduite accroît la capacité de déformation élastique de chaque lame de contact et permet d'augmenter la course de fléchissement de chaque lame de contact, et ceci malgré la hauteur totale particulièrement réduite du connecteur.

Conformément aux enseignements de l'invention, pour augmenter encore la course de fléchissement de chaque lame de contact 16, on prévoit un trou (non représenté) dans la portion encastrée 46 de la lame, ce trou recevant l'extrémité libre du bec 32 lorsque la lame est en position fléchie.

L'amincissement du tronçon intermédiaire de chaque lame est réalisé par écrasement local, avant la découpe des lames. Ce mode d'obtention de l'amincissement "e" permet d'accroître les caractéristiques mécaniques du matériau dans la zone écrouie par l'écrasement.

Dans ces différentes variantes de réalisation on remarque que la conception du corps en matériau isolant 12 avec un fond 18 et des faces parallèles 26 pour délimiter les logements 24 qui reçoivent les lames de contact 12 est particulièrement avantageuse en ce qu'elle procure une très bonne isolation électrique des contacts l'un par rapport à l'autre. cette isolation est complétée par la conception complémentaire des fentes 60 du couvercle 14.

De plus, en présence d'une carte en position d'utilisation, tous les logements 24 sont fermés de manière quasi étanche, toute pénétration de poussière ou de tout autre corps étranger dans les alvéoles 24 étant ainsi évitée.

Dans ces modes de réalisation du type à lames de contact en "épingles à cheveux", on remarque que les boucles ou plis médians 44 des lames de contact 16 sont tournées vers le " centre" du connecteur, c'est-à-dire vers le plan médian P qui, lorsqu'une carte est en position d'utilisation, s'étend sensiblement au droit du centre de plages de contact de la carte à microcircuit.

Cette conception géométrique permet de conférer au connecteur une très petite longueur hors tout (mesurée dans le sens de la largeur en considérant la figure 3) et donc un très faible encombrement sur la carte à circuit imprimé qui le reçoit.

Sans sortir du cadre de l'invention, le connecteur qui vient d'être décrit peut être utilisé dans un dispositif de lecture-écriture dans lequel la carte à mémoire électronique se déplace, par rapport au connecteur, selon une direction perpendiculaire à son plan général et perpendiculaire au plan de la face 20.

Dans une telle application, la conception des lames de contact 16 permet d'obtenir un effet d'auto-nettoyage du fait de la coopération des extrémités incurvées 30 avec les pistes conductrices de la carte lors de la phase finale d'atterrissage de cette dernière.

## Revendications

1. Connecteur électrique (10) pour le raccordement d'une carte à mémoire électronique comportant sur une de ses faces principales une pluralité de plages de contact électrique alignées, le connecteur comportant un support (12) en matériau isolant présentant une face plane (20) parallèle à la carte et une pluralité de conducteurs électriques (16) en forme de lames déformables élastiquement (16) comprenant chacune une première extrémité incurvée, de contact (30) avec l'une des plages de la carte, faisant saillie hors du plan de la face plane (20) du support (12), une portion médiane de liaison (38) de la lame (16) au support (12) et une seconde extrémité de raccordement (34) de la lame (16) à un circuit de traitement d'un dispositif de lecture-écriture, du type dans lequel la partie médiane de liaison (38) de chaque lame (16) est une partie, repliée en forme d'épingle à cheveux, comportant une première branche (40) dont une portion d'extrémité libre (46) est encastrée dans un logement du support et se prolonge par l'extrémité de raccordement (34) de la lame (16), et comportant une seconde branche (42) dont l'extrémité libre se prolonge par l'extrémité incurvée de contact (30) de la lame (16), la première (40) et la seconde (42) branches étant reliées entre elles par un pli médian en forme de U (44), **caractérisé en ce que** l'extrémité incurvée (30) se prolonge par un bec sensiblement parallèle à la face plane (20) du support, et **en ce que**, pour augmenter la course de fléchissement de chaque lame de contact (16), il est prévu un trou dans ladite portion encastrée (46) de la lame, ce trou recevant l'extrémité libre du bec (32) lorsque la lame est en position fléchie.

2. Connecteur électrique selon la revendication précédente, **caractérisé en ce que** le bec (32) est sollicité élastiquement en appui contre une surface de butée (74) du connecteur.

3. Connecteur électrique selon l'une des revendication 1 ou 2, **caractérisé en ce que** la première branche (40) s'étend en regard d'un logement (24) formé en vis-à-vis dans la face plane (20) du support (12) pour permettre un fléchissement de la première branche (40) selon une direction sensiblement perpendiculaire à la face plane (20) du support (12).

4. Connecteur électrique selon la revendication 3, **caractérisé en ce que** l'extrémité incurvée de contact (30) de chaque lame (16) s'étend sensiblement au droit de l'extrémité libre encastrée (46) de la première branche (40) de la partie médiane de liaison de la lame (16).

5. Connecteur électrique selon l'une quelconque des revendications précédentes, **caractérisé en ce que** chaque lame de contact (16) est réalisée sous la forme d'une bande métallique découpée et pliée d'épaisseur sensiblement constante, et **en ce que** chaque bande de contact comporte un tronçon intermédiaire d'épaisseur réduite (e), réalisé notamment par écrasement, qui s'étend entre les extrémités de contact et de raccordement de la lame.

6. Connecteur électrique selon la revendication 5, **caractérisé en ce que** le tronçon d'épaisseur réduite (e) s'étend entre l'extrémité libre (46) de la première branche et l'extrémité libre de la seconde branche (42).

7. Connecteur électrique selon l'une quelconque des revendications précédentes, **caractérisé en ce que** l'extrémité incurvée de contact (30) est située longitudinalement entre le pli médian qui relie entre elles les première (40) et seconde (42) branches de la partie médiane de liaison, et l'extrémité de raccordement (34).

## Claims

1. Electrical connector (10) for the connection of an electronic memory card, including, on one of its main faces, a plurality of aligned electrical contact pads, the connector including a support (12) made of insulating material having a plane face (20) parallel to the card and a plurality of electrical conductors (16) in the form of elastically deformable blades (16) each comprising a first incurvate end (30), for contacting one of the pads on the card, projecting from the plane of the plane face (20) of the support (12), a central portion (38) for connecting the blade (16) to the support (12) and a second end (34) for connecting the blade (16) to a processing circuit of a read/write device, of the type in which the central connecting part (38) of each blade (16) is a part, folded over into the shape of a hairpin, including a first branch (40) whose free end (46) is embedded in a housing in the support and is extended by the connection end (34) of the blade (16), and including a second branch (42) whose free end portion is extended by the incurvate contacting end (30) of the blade (16), the first (40) and second (42) branches being connected together by a U-shaped central fold (44), **characterized in that** the incurvate end (30) is extended by a nose (32) substantially parallel to the plane face (20) of the support, and **in that**, in order to further increase the extent of bending of the blade, a hole is provided in said embedded portion (46) of the blade, this hole receiving the free end of the nose when the blade is in the bent position.

2. Electrical connector according to claim 1, **characterized in that** the nose (32) is elastically urged so as to bear against a stop surface (74) of the connector.

3. Electrical connector according to either claim 1 or 2, **characterized in that** the the first branch (40) extends opposite a housing (24) formed facingly in the plane face (20) of the support (12) in order to permit bending of the first branch (40) in a direction substantially perpendicular to the plane face (20) of the support (12).

4. Electrical connector according to claim 3, **characterized in that** the incurvate contacting end (30) of each blade (16) extends substantially in line with the embedded free end (46) of the first branch (40) of the central connecting part of the blade (16).

5. Electrical connector according to any one of the preceding claims, **characterized in that** each contact blade (16) is produced in the form of a cut-out and folded metal strip of substantially constant thickness, and **in that** each contact strip includes an intermediate section of reduced thickness (e), produced especially by compression, which extends between the contacting and connection ends of the blade.

6. Electrical connector according to claim 5, **characterized in that** the section of reduced thickness (e) extends between the free end (46) of the first branch and the free end of the second branch (42).

7. Electrical connector according to any one of the preceding claims, **characterized in that** the incurvate contacting end (30) is located longitudinally between the central fold, which connects together the first (40) and second (42) branches of the central connecting part and the connection end (34).

## Patentansprüche

1. Elektrischer Verbinder (10) zum Anschluss einer elektronischen Speicherkarte, der auf einer seiner Hauptseiten ein Mehrzahl aufeinander ausgerichteter elektrischer Kontaktbereiche umfasst, wobei der Stecker einen Träger (12) aus isolierendem Material mit einer ebenen, zur Karte parallelen Seite (20) und eine Mehrzahl elektrischer Leiter (16) in Form elastisch verformbarer Zungen (16) umfasst, die jeweils ein erstes, umgebogenes Ende umfassen, das Kontakt (30) mit einem der Bereiche der Karte hat und aus der Ebene der ebenen Seite (20) des Trägers (12) heraussteht, sowie einen mittleren Verbindungsbereich (38) zur Verbindung der Zunge (16) mit dem Träger (12) und ein zweites Ende (34) zum Anschluss der Zunge (16) an eine Verarbeitungsschaltung der Lese-Schreib-Vorrichtung, der Art, bei der der mittlere Verbindungsbereich (38) jeder Zunge (16) ein nach Art einer Haarnadel umgebogenes Teil ist, das einen ersten Arm (40) aufweist, von dem ein freier Endabschnitt (46) in eine Aufnahme des Trägers eingefügt ist und durch das Anschlussende (34) der Zunge (16) verlängert ist, und einen zweiten Arm (42), dessen freies Ende durch das umgebogene Kontaktende (30) der Zunge (16) verlängert ist, wobei der erste (40) und der zweite (42) Arm miteinander über einen U-förmigen Mittelknick (44) verbunden sind, **dadurch gekennzeichnet, dass** das umgebogene Ende (30) durch eine zur ebenen Seite (20) des Trägers im Wesentlichen parallele Nase verlängert ist, und dass zum Erreichen einer höheren Biegefähigkeit jeder Kontaktzunge (16) in dem eingespannten Abschnitt (46) der Zunge eine Öffnung vorgesehen ist, die das freie Ende der Nase (32) aufnimmt, wenn sich die Zunge in umgebogener Position befindet.

2. Elektrischer Verbinder nach dem vorstehenden Anspruch, **dadurch gekennzeichnet, dass** die Nase (32) elastisch gegen eine Anschlagfläche (74) des Verbinders anliegend gezogen wird.

3. Elektrischer Verbinder nach einem der Ansprüche 1 oder 2, **dadurch gekennzeichnet, dass** sich der erste Arm (40) gegenüber einer Aufnahme (24) erstreckt, die gegenüberliegend in der ebenen Seite (20) des Trägers (12) gebildet ist, um ein Umbiegen des ersten Arms (40) in einer zur ebenen Seite (20) des Trägers (12) im Wesentlichen senkrechten Richtung zu ermöglichen.

4. Elektrischer Verbinder nach Anspruch 3, **dadurch gekennzeichnet, dass** sich das umgebogene Kontaktende (30) jeder Zunge (16) im Wesentlichen im Bereich des eingespannten freien Endes (46) des ersten Arms (40) des mittleren Verbindungsbereichs der Zunge (16) erstreckt.

5. Elektrischer Verbinder nach einem der vorstehenden Ansprüche, **dadurch gekennzeichnet, dass** jede Kontaktzunge (16) in Form eines ausgestanzten und umgebogenen Metallstreifens mit im Wesentlichen konstanter Dicke ausgeführt ist, sowie dadurch, dass jeder Kontaktstreifen ein Zwischenstück geringerer Stärke (e) aufweist, das insbesondere durch Breiten hergestellt wird und sich zwischen dem Kontakt- und dem Anschlussende der Zunge erstreckt.

6. Elektrischer Verbinder nach Anspruch 5, **dadurch gekennzeichnet, dass** sich das Stück mit verringerter Dicke (e) zwischen dem freien Ende (46) des ersten Arms und dem freien Ende des zweiten Arms (42) erstreckt.

7. Elektrischer Verbinder nach einem der vorstehenden Ansprüche, **dadurch gekennzeichnet, dass** das umgebogene Kontaktende (30) in Längsrichtung zwischen dem Mittelknick, der den ersten (40) und den zweiten Arm (42) des mittleren Verbindungsbereichs miteinander verbindet, und dem Anschlussende (34) angeordnet ist.
